# EUROPEAN PATENT APPLICATION

(11) **EP 2 088 450 A1**
(43) Date of publication of application: **12.08.2009**
(21) Application number: 09151683.1
(22) Date of filing: 29.01.2009
(51) Int. Cl.: G01S 7/52

(54) **Method of adaptively filtering parametric data for display**

(30) Priority: 07.02.2008 US 27612
(71) Applicant: Honeywell International Inc., Morristown, NJ 07962 (US)
(72) Inventor: Garrison, Mike, P.O. Box 2245 Morristown, NJ 07962-2245 (US); Kroening, Scott, P.O. Box 2245 Morristown, NJ 07962-2245 (US); Bair, Gregory, P.O. Box 2245 Morristown, NJ 07962-2245 (US); Ledbetter, Cary, P.O. Box 2245 Morristown, NJ 07962-2245 (US)
(74) Representative: Buckley, Guy Julian

(57) **Abstract**

A system and method are provided for accurately rendering one or more parameters on an electronic display without being distractive. The system and method provide for adaptively filtering parametric data prior to rendering images representative of the parametric data on a display. Relatively heavy electronic filtering is applied to the parametric data when the parameter is relatively constant, whereas relatively lighter electronic filtering is applied to the parametric data as the parameter changes at ever increasing rate of change magnitudes.

## Description

### TECHNICAL FIELD

The present invention generally relates to electronic display of one or more parameters and, more particularly, to a system and method for adaptively filtering analog parametric data for display by an electronic display system.

### BACKGROUND

Many systems include one or more devices to visually display one or more parameters to one or more observers. In the past, such devices included mechanical and/or electromechanical analog-type devices. More recently, systems are being implemented or retrofitted with one or more electronic display systems to visually render one or more parameters on one or more displays. In most instances, the electronic display systems process analog data supplied from the same or similar devices that were used with the older mechanical and/or electromechanical devices.

Although the electronic display systems that process analog data are generally accurate, reliable, and robust, the electronic display systems can exhibit certain drawbacks. In particular, the analog data supplied to the electronic displays can be relatively noisy. Because the electronic display systems typically exhibit relatively rapid and accurate response times (e.g., relatively high bandwidth), when images representative of the analog data are rendered on the display, the rendered images may vary relatively rapidly about the actual parameter value. This variation of the rendered parameter can be distractive to an observer and, in some instances, can unnecessarily cause increased observer workload and, concomitantly, increased observer fatigue. Unfortunately, a single, low-cost solution is presently unavailable because the level of noise, and thus the amount of variations in the rendered parameter(s), may vary with each end-use system and/or platform.

Hence, there is a need for a single, relatively low-cost system and method of accurately rendering one or more parameters on an electronic display without being distractive to and/or causing fatigue of an observer that is using the electronic display. The present invention addresses at least this need.

### BRIEF SUMMARY

In one embodiment, and by way of example only, an electronic display system includes a display and a processor. The display is coupled to receive parameter image rendering display commands and is operable, in response thereto, to render one or more images at least representative of one or more parameters. The processor is coupled to the display and is adapted to receive parametric data representative of the one or more parameters. The processor is operable to: (i) determine rate of change of the parametric data; (ii) selectively vary filtration of the parametric data based at least in part on the determined rate of change, to thereby supply filtered parametric data; (iii) generate the parameter image rendering display commands based on the filtered parametric data; and (iv) supply the parameter image rendering display commands to the display.

In another exemplary embodiment, a method of displaying parametric data includes determining rate of change of the parametric data, and selectively varying filtration of the parametric data based at least in part on the determined rate of change, to thereby supply filtered parametric data. The filtered parametric data is then rendered on a display.

In yet another exemplary embodiment, an aircraft avionics display system includes an avionics display and a processor. The avionics display is coupled to receive aircraft parameter image rendering display commands and is operable, in response thereto, to render one or more images at least representative of one or more aircraft parameters. The processor is coupled to the display and is adapted to receive aircraft sensor data. The processor is operable to: (i) determine rate of change of the aircraft sensor data; (ii) selectively vary filtration of the aircraft sensor data based at least in part on the determined rate of change, to thereby supply filtered aircraft sensor data; (iii) generate the aircraft parameter image rendering display commands based on the filtered aircraft sensor data; and (iv) supply the aircraft parameter image rendering display commands to the avionics display.

Furthermore, other desirable features and characteristics of the display system and method will become apparent from the subsequent detailed description and the appended claims, taken in conjunction with the accompanying drawings.

### BRIEF DESCRIPTION OF THE DRAWINGS

The present invention will hereinafter be described in conjunction with the following drawing figures, wherein like numerals denote like elements, and wherein:

FIG. 1 is a functional block diagram of an exemplary electronic display system and that may be used to implement an embodiment of the present invention;

FIG.2 is a functional block diagram of an exemplary adaptive filter that may be implemented by the exemplary electronic display system of FIG. 1;

FIG. 3 is a functional block diagram of an alternative exemplary adaptive filter that may be implemented by the exemplary electronic display system of FIG. 1; and

FIG. 4 is a flowchart depicting an exemplary method that may be implemented by the exemplary system and adaptive filters of FIGS. 1-3 for selectively filtering and displaying data.

### DETAILED DESCRIPTION

The following detailed description is merely exemplary in nature and is not intended to limit the invention or the application and uses of the invention. Furthermore, there is no intention to be bound by any theory presented in the preceding background or the following detailed description. In this regard, although one embodiment is described as being implemented in an aircraft environment, it will be appreciated that the invention is not limited to this particular environment, but may be implemented in numerous and varied environments and systems.

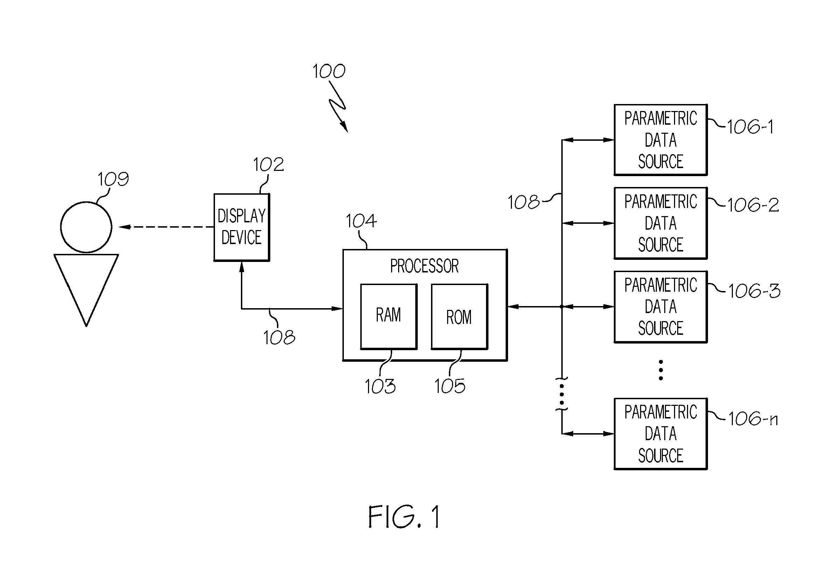

Turning now to FIG. 1, a functional block diagram of an exemplary electronic display system 100 is depicted and includes a display device 102, a processor 104, and one or more parametric data sources 106 (e.g., 106-1, 106-2, 106-3, ... 106-N). The display device 102 is used to render and display various images and data, in both a graphical and a textual format, and to supply visual feedback to a user 109. As will be described in more detail further below, the images and data that are rendered and displayed include at least images that are at least representative of parameters supplied by the one or more parametric data sources 106. It will be appreciated that the display device 102 may be any one of numerous known display devices suitable for rendering image and/or text data in a format viewable by the user 109. Some non-limiting examples of suitable displays include various cathode ray tube (CRT) displays, and various flat panel displays such as, various types of LCD (liquid crystal display), plasma, and TFT (thin film transistor) displays. The display device 102 may additionally be based on a panel mounted display, a HUD projection, or any other technology now known or developed in the future. It will additionally be appreciated that the display device 102 may be implemented in any one of numerous end-use systems and environments. Some non-limiting examples of end-use systems and environments include manufacturing plants, various power generation plants including, for example, coal, natural gas, and nuclear power plants, various vehicles, including boats, ships, submarines, automobiles, trucks, trains, and aircraft. In one particular implementation, the display device 102 is implemented in an aircraft. In such an implementation, the display device 102 may be, for example, a primary flight display (PFD) or a multi-function display (MFD).

The processor 104 is in operable communication with the parametric data sources 106 and the display device 102 via, for example, a communication bus 108. The processor 104 is coupled to receive various types of data supplied by the parametric data sources 106 and is operable to supply appropriate display commands to the display device 102 that cause the display device 102 to render various images. As will be described in more detail further below, the various images include one or more images that are at least representative of one or more variable parameters. Although it is depicted using a single functional block, it will be appreciated that the processor 104 may be implemented using one or more microprocessors, each of which may be any one of numerous known general-purpose microprocessors or application specific processors that operate in response to program instructions. Moreover, in the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. For example, operating system software and/or software routines could be stored on one or more separate memory devices. It will also be appreciated that the processor 104 may be implemented using various other circuits, not just one or more programmable processors. For example, digital logic circuits and analog signal processing circuits could also be used.

The parametric data sources 106 are in operable communication, via the communication bus 108, with the processor 104. As noted above, the parametric data sources 106 supply various amounts and types of data to the processor 104. The parametric data sources 106 may also be variously configured and variously implemented devices. For example, the parametric data sources 106 may be implemented using one or more sensors, one or more computers, one or more databases, one or more external systems, or various combinations thereof, the number and type of which may vary depending upon the particular end-use and environment of the electronic display system 100. Moreover, as may be appreciated, the data supplied from each parametric data source 106 may vary, also at least somewhat in dependence on the particular end-use environment. Preferably, however, one or more of the parametric data sources 106 are implemented using sensors that are operable to sense one or more parameters and supply parametric data representative of the sensed parameter to the processor 104.

Before proceeding further, it is noted that if the end-use environment of the electronic display system 100 is an aircraft avionics system, the parametric data sources 106 preferably include various aircraft sensors. The aircraft sensors are configured to sense and supply aircraft sensor data representative of various aircraft parameters. The various aircraft parameters may vary and may include, for example, aircraft speed, altitude, position, and heading, just to name a few. The parametric data sources 106 may additionally include a navigation computer, a navigation database, a source of weather data, a terrain avoidance and warning system (TAWS), a traffic and collision avoidance system (TCAS), an instrument landing system (ILS), and a runway awareness and advisory system (RAAS), just to name a few.

No matter the particular number and type of parametric data sources 106 that are used, the processor 104, as previously noted, is configured to supply appropriate display commands to the display device 102 so that images that are at least representative of the parametric data supplied from one or more of the parametric data sources 106 may be rendered on the display device 102. In some instances, the parametric data supplied by one or more of the parametric data sources 106, namely those that are implemented using sensors, may be relatively noisy. Thus, without additional processing, the images that are rendered on the display device 102 may vary relatively rapidly about the actual sensed parameter value. To alleviate this potential drawback, however, the processor 104 implements an adaptive filter that significantly reduces or substantially eliminates this potential rapid variation, yet does not result in an unacceptable lag in rendering the parameter. In particular, the adaptive filter determines, based on the received parametric data, if a parameter is substantially constant (or is at least relatively steady state) or is changing sufficiently rapidly. If a parameter is substantially constant, then the adaptive filter applies relatively heavy electronic filtering to the parametric data. Conversely, if a parameter is changing sufficiently rapidly, then the adaptive filter applies relatively less electronic filtering to the parametric data. The adaptive filter and its functionality may be implemented using various configurations and techniques.

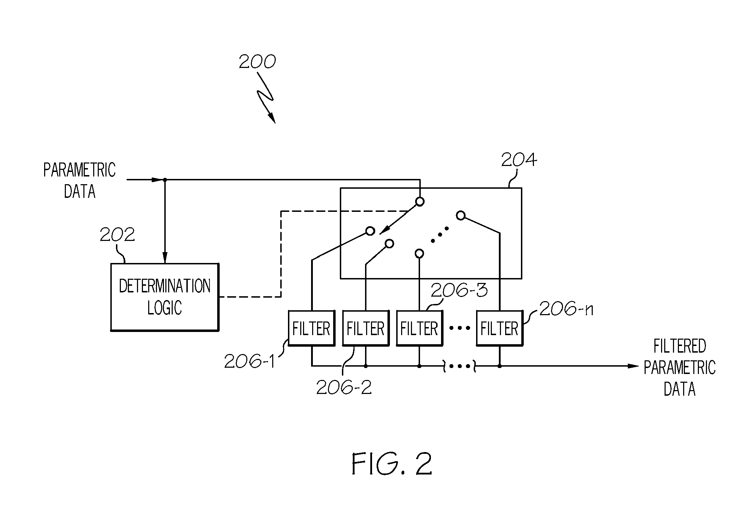

An exemplary embodiment of an adaptive filter is depicted in FIG. 2 in functional block diagram form, and with reference thereto will be described. Before doing so however, it is noted that although the adaptive filter 200 is depicted in FIG. 2 using separate functional blocks, this is merely exemplary. Indeed, the functions implemented by each separately depicted functional block could be implemented in a single functional block or device. Moreover, the adaptive filter 200 could be implemented using hardware, software, firmware, or various combinations thereof, and could be implemented separate from the processor 104.

Turning now to a description of the adaptive filter 200, it is seen that the depicted embodiment includes determination logic 202, switch logic 204, and a plurality of filters 206 (e.g., 206-1, 206-2, 206-3 ... 206-N). The determination logic 202 is coupled to receive parametric data supplied from one or more of the parametric data sources 106. It is noted that the parametric data received by the determination logic 202 may be supplied directly from one or more of the parametric data sources 106 or the data may have been processed in one form or another by the processor 104 before being supplied to the determination logic. In either case, the determination logic 202, upon receipt of the parametric data supplied thereto, determines the amount of electronic filtration that the parametric data needs to undergo before being rendered on the display device 102. The determination logic 202, based on this determination, supplies an appropriate command to the switch logic 204.

The switch logic 204 is disposed between each of the filters 206 and the display device 102, and is responsive to the command supplied from the determination logic 202. In particular the switch logic 204, in response to the command from the determination logic 202, directs the parametric data to one of the plurality of filters 206. The selected filter 206 then electronically filters the parametric data and supplies the filtered parametric data for rendering on the display device 102. It will be appreciated that the filtered parametric data may undergo further processing in the processor 104 before being supplied to the display device 102 for rendering thereon, or the filtered parameter data may already be suitably formatted. It will be appreciated that this may vary with different embodiments.

The filters 206 generally vary from filters that apply relatively heavy filtering to the parametric data, to filters that apply relatively little filtering to the parametric data. Thus, when the determination logic 202 determines that relatively heavy filtering needs to be applied to the parametric data, the switch logic 204 is commanded to supply the parametric data to an appropriate filter 206. And similarly, when the determination logic 202 determines that relatively little filtering needs to be applied to the parametric data, the switch logic 204 is commanded to supply the parametric data to an appropriate filter 206. It will be appreciated that the number of filters 206 that may be selected may vary. It will additionally be appreciated that each of the filters 206 depicted in FIG. 2 may represent different filter types, or one or more different filter parameters (e.g., different time constants) of a particular filter type, or both. No matter what each depicted filter 206 represents, it is additionally noted that the adaptive filter 200 is configured such that the changes in filter type and/or filter parameter 206 are smoothly ramped in and out of implementation.

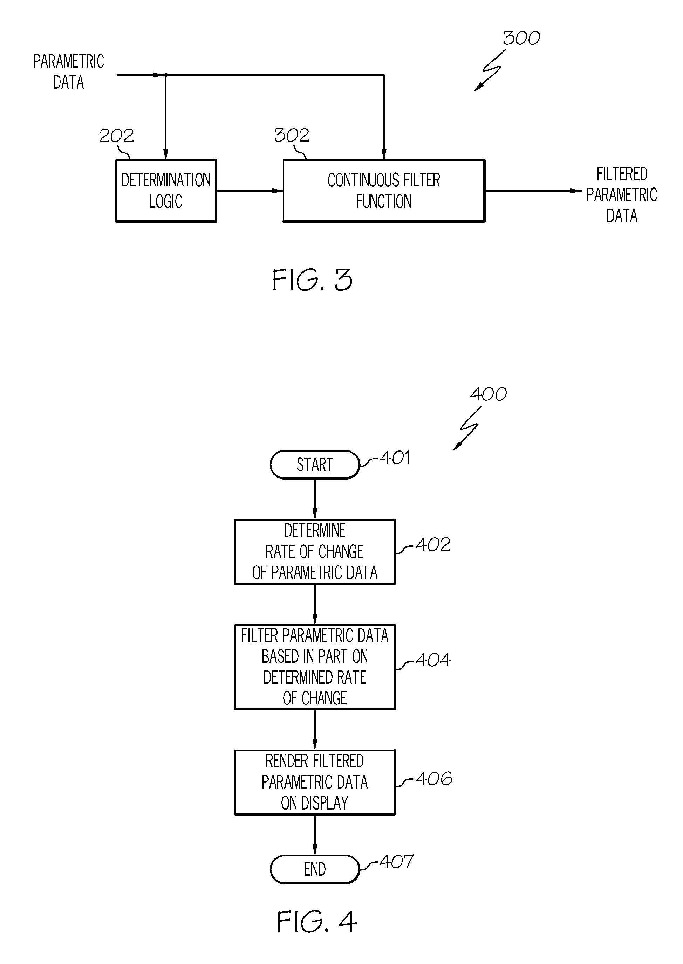

In the embodiment depicted in FIG. 2 the filtration of the parametric data is varied discretely. That is, discrete filters and/or filter parameters 206, as needed, are selectively implemented to electronically filter the parametric data. In an alternative embodiment, which is depicted in FIG. 3, rather than selecting discrete filters and/or filter parameters 206, a continuous filter function 302 is described and implemented. With this embodiment, the continuous filter function 302, based at least in part on the determination made in the determination logic 202, is configured to continuously (rather than discretely) vary the amount of filtering to be supplied to the parametric data.

Having described the electronic display system 100 and the adaptive filter 200 in detail, including a general description of the overall function each implements, a more detailed description of an exemplary process carried out by the electronic display system 100 to implement the described function will now be provided. In doing so, reference should be made to FIG. 4, which depicts the exemplary process 400 in flowchart form. It is noted that the parenthetical references included in the following description correspond to the numerals used in FIG. 4 to reference the flowchart blocks.

As FIG. 4 depicts, when the process 400 is initiated (401), the amount of electronic filtration that the parametric data needs to undergo is first determined, and then this amount of electronic filtration is applied. Although this determination may be made using any one of numerous techniques, in the depicted embodiment the electronic display system 100 makes this determination based at least in part on the rate of change of the parametric data. More specifically, at least in the preferred embodiment, the rate of change of the parametric data (e.g., the first derivative of the parametric data with respect to time) is determined (402). The parametric data is then filtered based, at least in part, on the determined rate of change (404). The filtered parametric data is then rendered on the display device (406).

Though not depicted in FIG. 4, it is noted that in a particular preferred embodiment, the electronic display system 100 is additionally configured, after the rate of change of the parametric data has been determined, to take the absolute value of the determined rate of change (e.g., determine the rate of change magnitude). Moreover, at least in some embodiments, the determined rate of change magnitude is then compared to a plurality of values, and the amount of electronic filtration to apply to the parametric data is determined based on this comparison. In an alternative embodiment, a determination is made as to whether the determined rate of change magnitude falls within one or more predetermined range values. The amount of electronic filtration to apply to the parametric data is then determined based on this comparison. No matter whether the determined rate of change magnitude is compared to a plurality of single values or is determined to fall within one or more predetermined ranges, the amount of electronic filtration that is applied to the parametric data may be either discretely or continuously varied, depending upon the particular embodiment (e.g., FIG. 2 or FIG. 3) being implemented.

The system and method described herein provide for a means of accurately rendering one or more parameters on an electronic display without being distractive to and/or causing fatigue of an observer that is using the electronic display. The system and method provide for adaptively filtering parametric data prior to displaying images representative of the data. For example, relatively heavy electronic filtering may be applied to the parametric data when a parameter is relatively constant, whereas relatively lighter electronic filtering may be applied as the parameter changes at ever increasing rate of change magnitudes.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of displaying parametric data, comprising the steps of:
determining rate of change (404) of the parametric data (402);
selectively varying filtration of the parametric data based at least in part on the determined rate of change (404), to thereby supply filtered parametric data; and
rendering the filtered parametric data on a display (406).

2. The method of Claim 1, further comprising:
determining a magnitude of the determined rate of change of the parametric data; and
selectively varying the filtration of the parametric data based at least further in part on the determined rate of change magnitude.

3. The method of Claim 2, further comprising:
determining if the determined rate of change magnitude exceeds one or more predetermined values; and
selectively varying the filtration of the parametric data based on the determination of whether the determined rate of change magnitude exceeds the one or more predetermined values.

4. The method of Claim 1, further comprising:
selecting one or more filter parameters based at least in part on the determined rate of change; and
filtering the parametric data using a filter that implements the selected one or more filter parameters to thereby supply the filtered parametric data.

5. The method of Claim 1, further comprising:
selecting one or more filters based at least in part on the determined rate of change; and
filtering the parametric data using the selected one or more filters to thereby supply the filtered parametric data.

6. The method of Claim 1, further comprising:
comparing the determined rate of change magnitude to a plurality of predetermined values; and
selectively varying the filtration of the parametric data based at least in part on the comparison.

7. The method of Claim 1, further comprising:
determining if the determined rate of change magnitude falls within one or more predetermined value ranges; and
selectively varying the filtration of the parametric data based at least in part on the determination of which of the one or more predetermined range values that the determined rate of change falls within.
